(19) Europäisches Patentamt
European Patent Office
Office européen des brevets

(11) Veröffentlichungsnummer: **0 184 558**
**B1**

(12) # EUROPÄISCHE PATENTSCHRIFT

(45) Veröffentlichungstag der Patentschrift: **14.12.88**

(51) Int. Cl.⁴: **C 02 F 5/12**

(21) Anmeldenummer: **85810573.7**

(22) Anmeldetag: **03.12.85**

(54) **Verfahren zur Verhinderung von Kesselstein sowie Antikesselsteinmittel.**

(30) Priorität: **04.12.84 FR 8418429**

(43) Veröffentlichungstag der Anmeldung: **11.06.86 Patentblatt 86/24**

(45) Bekanntmachung des Hinweises auf die Patenterteilung: **14.12.88 Patentblatt 88/50**

(84) Benannte Vertragsstaaten: **AT BE CH DE GB IT LI LU NL SE**

(56) Entgegenhaltungen:
**FR-A-1 435 023**
**GB-A-1 577 923**
**US-A-4 085 060**

(73) Patentinhaber: **FABORGA S.A., Chemin Champ- du-Puits 3, Genève (CH)**

(72) Erfinder: **Bouet, Philippe Alfred, Les Angevins, F-89136 Cudot (FR)**

(74) Vertreter: **Nikolaiski, Eckhard Siegfried, Dr., c/o IPTO S.A. P.O. Box 109, CH- 1211 Genève 17 (CH)**

**EP 0 184 558 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein Verfahren zur Verhinderung von Kesselstein, mit dem die krustenverhindernde Wirkung von polymerem Kesselstein-Inhibitor in Industrieanlagen deutlich erhöht werden kann, in denen Wasser verwendet wird, welches ausfällbare Salze enthält.

Die Erfindung betrifft auch Stoffkombinationen, die zu diesem Zweck in den genannten Anlagen verwendet werden.

Mit Ausnahme von wenigen Fällen, in welchen natürlich vorkommende Wässer wenig salzhaltig und, im Gegenteil, allgemein korrodierend sind, enthalten sie meistens bestimmte Salze von Erdalkalimetallen, insbesondere von Calcium und/oder Magnesium, in Lösung, welche die unangenehme Eigenschaft haben, unter der isolierten oder gemeinsamen Wirkung einer Temperaturerhöhung und/oder ihrer fortschreitenden Konzentrierung durch Abdampfen des Wassers selbst immer unlöslicher zu werden. Dieses fortschreitende Unlöslichwerden führt nicht nur zu Ausfällungen, die als solche sehr unerwünscht sind, sondern es erfolgt auch deren Festsetzen an den Metalloberflächen, insbesondere in den Produktions- und Wärmeübertragungsanlagen, auf eben den Oberflächen, die zur Wärmeübertragung bestimmt sind.

Ob es sich nun um die Umwandlung dieser Wässer in Dampf zum thermischen oder thermodynamischen Gebrauch oder um ihre Verwendung beim Transport oder der Entfernung von Wärmeeinheiten handelt, die beobachteten Ausfällungen verringern den Austausch und damit die Ausbeute (Leistung) beträchtlich, und sie können Abschnitte verminderten Flusses und verminderter Geschwindigkeit der in diesen Anlagen verwendeten Wässer verursachen.

In der Tat hält man aufgrund der tatsächlich gewünschten hohen Ausbeuten (Leistung) sowie aus wirtschaftlichen Gründen wegen der zunehmenden Verknappung verfügbaren Wassers die Industrie dazu an, diese Wässer maximal vorzubehandeln, sie durch Mineralienentfernung von allen Salzen zu befreien oder diese Salze durch Ionenaustausch nichtausfällbar zu machen, oder ihnen Hilfsmittel zuzufügen, die ihr fortschreitendes Unlöslichwerden verzögern oder, in bestimmten Fällen, sogar verhindern können. Insbesondere in Kühlanlagen sind die abzuführenden Wärmemengen erheblich, weshalb die Forderungen nach zusätzlichem Wasser im allgemeinen entsprechend groß sind. Dessen vollständige Vorbehandlung erfordert so bedeutende Nebeninstallationen, daß diese selbst zu wirklichen Fabriken werden, die äußerst kostspielig sind. In diesen Fällen erlauben es bestimmte Hilfsmittel, eine weniger vollständige und damit weniger kostspielige Vorbehandlung zu tolerieren, wenn sie die Ausfällung verzögern und die Haftung von krustenbildenden Salzen, die insgesamt oder teilweise im Wasser vorliegen können, auf Oberflächen zu verringern.

Die hohen Ausbeuten (Leistung) und die großen Durchflußmengen, die in den Dampfgeneratoren sehr hoher Wärmeleistung erreicht werden, erfordern eine äußerst gründliche Reinigung des Brauchwassers, in welchem keine Gase oder Salze tolerierbar sind. Dies gilt nicht immer in derselben Weise in Heizanlagen mittlerer oder geringer Leistung, die trotz der ausgezeichneten Ausbeuten, die sie zulassen, willkürliche oder zufällige, salzhaltige Rückstände tolerieren können, wenn man bestimmte Vorsichtsmaßnahmen und die Verwendung spezifischer, kesselsteinverhindernder Hilfsmittel vorzieht.

Zu den in der entsprechenden Literatur vorgeschlagenen Hilfsmitteln gehören Zusammensetzungen zum Inhibieren einer Krustenbildung und sogar der Ausfällung, wobei sehr unterschiedliche Substanzen, wie aliphatische, von Fettsubstanzen abgeleitete Polyamine, die in der FR-PS-1 435 023 beansprucht werden, polymere Derivate von hydrolysiertem Maleinsäureanhydrid, synergistische Mischungen aus Derivaten von Polymaleinsäureanhydrid und Polyacryl- und Polymethacrylsäure sowie deren Salze, beansprucht in der FR-PS-2 116 139 und -2 223 308, Acrylsäurepolymere, die in Säureform oder als wasserlösliche Natriumsalze im Handel verfügbar sind, Polymere und/oder Copolymere von Acryl- und Methacrylsäure mit vorherbestimmtem Molekulargewicht und deren Salze, beansprucht in der FR-PS-2 514 746, oder auch die Terpolymeren von Acryl-, Methacryl- und Itaconsäure und deren Salze, beansprucht in der FR-PS-2 544 722 als wichtige Verbesserungsmittel der Wirkungen kesselsteinverhindernder Mittel aufgeführt werden.

Aufgrund der begrenzten krustenverhindernden Wirksamkeit von Inhibitorzusammensetzungen, die bereits erwähnt wurden, insbesondere derjenigen, die bei der Verwendung der Fettpolyamine der oben genannten FR-PS-1 435 023 aufgeführt wurden hat der Anmelder Möglichkeiten untersucht, sie mit wirksameren Derivaten zu kombinieren, die in den anderen, oben genannten Patentschriften beansprucht werden.

Eine bei dieser Untersuchung aufgetretene Hauptschwierigkeit war die Konzipierung eines zweckmäßigen Arbeitsverfahrens, das zu gleicher Zeit die Beschleunigung der Kesselsteinbildung, deren möglichst einfache Reproduzierbarkeit, deren genaue und vergleichende Messung im Laboratorium unter Bedingungen ausreichender Zuverlässigkeit erlaubt.

Wenn die FR-PS-1 435 023 von Versuchen in den Generatoren selbst berichtet, muß berücksichtigt werden, daß diese in situ Praxis sehr langwierig, äußerst kostspielig und relativ ungenau sind, und zwar aufgrund erheblicher und variabler Mengen der betreffenden Niederschläge in Abhängigkeit der ebenfalls variablen Betriebsdrehzahl des Generators. Diese Methode führt u.a. zu der Gefahr, eine übermäßige Kesselsteinbildung der Anlagen zuzulassen. In der oben genannten FR-PS-2 116 139 und -2 223 308 wird weiter von Versuchen berichtet, die 1000 h, 500 h oder wenigstens 5 h dauern können. Die beschriebenen Methoden sind im Hinblick auf das vom Anmelder beabsichtigte Studienprojekt relativ lang und bestimmte Methoden scheinen ungewollt bestimmte, entscheidende Faktoren der Kesselsteinbildung zu vernachlässigen, wie z. B. - im Verlauf ihrer fortschreitenden Konzentration - die Verteilung ausfällbarer Salze einerseits in weniger gefährlichen Niederschlägen in Form von Verschmutzungen und andererseits in sehr störenden Niederschlägen in Form von

krustenbildendem Kesselstein, wobei es eben letztgenannte Bildung ist, die das Funktionieren und die Lebensdauer der Anlagen entscheidend bestimmt. Angeregt von der durch die deutsche, VdTÜV bezeichnete Kontrollbehörde ausgearbeiteten Methodik hat der Anmelder für seine Untersuchung ein seit langem beschriebenes, vereinfachtes Arbeitsverfahren angewendet, das zahlreiche Vorteile mit sich bringt, wie z. B. die relative Schnelligkeit der Tests, die, einschließlich der Analysen, in etwa 15 h durchgeführt werden können, deren genaue Reproduzierbarkeit sowie die Verläßlichkeit der Messungen, die nicht anzufechtende Vergleiche der Wirksamkeit zulassen.

Im Verlauf dieser Versuche nach dem beschriebenen Verfahren hat der Anmelder überraschenderweise festgestellt, daß die Kombination der bereits erwähnten Fettpolyamine mit den anderen, ebenfalls erwähnten polymeren Substanzen in allen untersuchten Fällen eine Aktivierungswirkung zu haben scheint, die als synergistisch bezeichnet werden kann.

Der Anmelder hat in überraschender Weise gefunden, daß die alleinige und einfache Zugabe geringer Anteile von Fettpolyaminen zu Polymaleaten und/oder Polyacrylaten und/oder Acrylat-Methacrylat-Copolymeren und/oder Acrylat-Methacrylat-Itaconat-Terpolymeren (einzeln oder als Mischung) die Wirksamkeit der Zusammensetzungen in überlegener Weise verbessert, verglichen mit dem, was aufgrund der unter denselben Bedingungen für jede einzelne Komponente in den jeweiligen betreffenden Dosierungen gemessenen Wirksamkeiten theoretisch und logisch zu erwarten gewesen wäre.

Umgekehrt hat die Zugabe geringer Anteile der genannten Polymeren zu hohen Anteilen von Fettpolyaminen nicht zu einem derartig unerwarteten Phänomen geführt. Bei allen letztgenannten Untersuchungen war die erzielte Verbesserung nur die arithmetische Summe der jeweiligen Aktivitäten jeder einzeln in entsprechender Dosis getesteten Komponente.

Andererseits scheint die oben beschriebene, überraschende Aktivierung nicht direkt proportional zur Menge der Fettpolyamine anzusteigen, die den genannten Polymeren zugefügt werden. Die Versuche haben gezeigt, daß relative Mindestmengen von 5 bis 15 Gew.-% der aktiven Fettpolyamine zu 95 bis 85 Gew.-% der aktiven, kesselsteinverhindernden Polymeren in den getesteten Zusammensetzungen ausreichen, um die beobachtete Wirkung zu gewährleisten.

Dagegen verringert die Zugabe von höheren Anteilen der Fettpolyamine zu den getesteten, kesselsteinverhindernden Polymeren die beschriebene, überraschende Aktivierung in keiner Weise. Bei dem im folgenden beschriebenen Versuchsverfahren haben Mischungen aus 50 Gew.-% kesselsteinverhindernder Polymeren und 50 Gew.-% Fettpolyaminen bezüglich der Kesselsteinbildung Ergebnisse erzielt, die denen vergleichbar sind, die mit Mischungen aus 15 % Fettpolyaminen und 85 % Polymeren erhalten werden.

Haupt-Gegenstand der vorliegenden Erfindung, die auf diesen Feststellungen beruht, ist ein kesselsteinverhinderndes Verfahren, das dadurch gekennzeichnet ist, daß man als Antikesselsteinmittel, das zu behandelndem Wasser zugegeben wird, eine synergistische Zusammensetzung (Kombination) aus mindestens 50 Gew.-% Polymeren als Salze ethylenisch ungesättigter Säuren, ausgewählt aus von Polymaleaten, Polyacrylaten, Polymethacrylaten, Maleat-Acrylat-Copolymeren, Acrylat-Methacrylat-Itaconat-Terpolymeren und Mischungen derselben, und höchstens 50 Gew.-% aliphatischer Polyamine der Formel

$$R - [NH - (CH_2)_3]_n - NH_2$$

in welcher

R einen aliphatischen Rest mit 12 bis 18 Kohlenstoffatomen bedeutet und

n eine gerade oder ungerade Zahl von 1 bis 6 ist,

wobei sich die Prozentsätze auf die Polymeren und Polyamine in trockenem Zustand beziehen, verwendet.

Diese Kombination enthält vorzugsweise 95 bis 85 Gew.-% der Polymeren und 5 bis 15 Gew.-% der aliphatischen Polyamine.

Ein weiterer Gegenstand der Erfindung ist ein Mittel zur Kesselsteinverhütung, das dadurch gekennzeichnet ist, daß es die oben definierte Kombination ist und vorzugsweise 95 bis 85 Gew.-% der Polymeren und 5 bis 15 Gew.-% der aliphatischen Polyamine enthält.

Die vom Anmelder getesteten Fettpolyamine gehören zu den in der FR-PS-1 435 023 beschriebenen Art und entsprechen der folgenden allgemeinen Formel

$$R - [NH - (CH_2)_3]_n - NH_2$$

in welcher

R einen aliphatischen Rest mit 12 bis 18 Kohlenstoffatomen bedeutet und

n eine gerade oder ungerade ganze Zahl zwischen 1 bis 6 ist.

Die Polyamine der oben genannten allgemeinen Formel können von Fettsäuren oder Fettalkoholen pflanzlichen, tierischen oder synthetischen Ursprungs in bekannter Weise erhalten werden und gegebenenfalls im aliphatischen $C_{12}$- bis $C_{18}$-Rest einfache oder konjugierte Doppelbindungen enthalten, wie dies bei handelsüblichen Fettpolyaminen der Fall ist.

Sie können weiterhin in flüssiger, pastenartiger oder sogar fester Form bei Umgebungstemperatur vorliegen, und deren Lösen oder Dispergieren im Wasser kann durch einfache, dem Fachmann bekannte Maßnahmen erfolgen, wie z. B. mechanisches Rühren bei den gewählten Temperaturen und/oder mit Hilfe von geringen Mengen nicht-ionischer, oberflächenaktiver Mittel, oder durch Lösungsmittel, die bekanntermaßen selbst keine deutlichen kesselsteinverhindernden Eigenschaften besitzen.

Die Polymeren des hydrolysierten Maleinsäureanhydrids, die den in der obigen FR-PS-2 116 139 und -2 223 308 beschriebenen Tests unterworfen wurden, haben eine Struktur entsprechend der folgenden allgemeinen Formel (I)

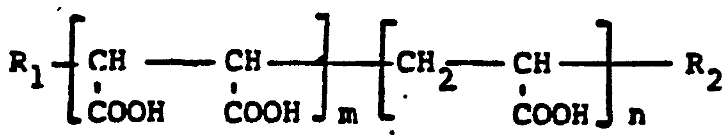

(I)

in welcher

$R_1$ und $R_2$, die gleich oder verschieden sind, Wasserstoff oder einen Rest bedeuten, der vom Lösungsmittel der Polymerisation oder dem verwendeten Katalysator stammt,

m eine andere Bedeutung als Null hat

und die Summe von $m + n$ mindestens $= 2$ und weniger als etwa 50 beträgt und so gewählt ist, daß das Polymer ein beabsichtigtes Molekulargewicht zwischen 300 und 5000 hat.

Da die Struktur dieser Polymeren noch nicht gut definiert ist, wie dies in der FR-PS-2 116 139 ausgeführt wird, hat der Anmelder diejenigen (in dieser PS empfohlenen) Polymeren mit einem mittleren Molekulargewicht (P.M.M.) um 800, wie sie im Handel erhalten werden konnten, getestet. Sie werden in der vorliegenden Anmeldung allgemein als "Polymaleate P.M.M. 800" in Form ihrer wasserlöslichen, Natrium oder anderen Salze aufgeführt.

Die getesteten Acrylsäurepolymeren entsprechen der folgenden allgemeinen Formel (II)

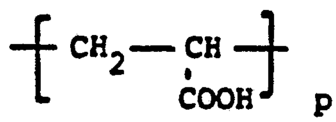

(II)

in welcher

p einen solchen Wert hat, daß das mittlere Molekulargewicht der Polymeren bei etwa 1500 liegt.

Sie können leicht im Handel in Säureform bezogen werden. In der vorliegenden Anmeldung werden sie allgemein als "Polyacrylate P.M.M. 1500" in Form der wasserlöslichen, Natrium- oder anderen Salze bezeichnet.

Die getesteten Polymeren und/oder Copolymeren der Acryl- und Methacrylsäure gehören zu dem in der bereits erwähnten FR-PS-2 514 746 beschriebenen Art und entsprechen der folgenden allgemeinen Formel (III)

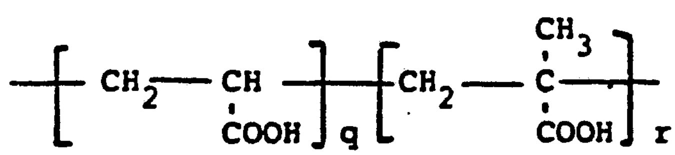

(III)

in welcher, im Fall der Methacrylsäurepolymeren

$q = 0$ ist, und

r einen solchen Wert hat, daß das mittlere Molekulargewicht der Polymeren bei etwa 800 liegt.

Im Fall der Copolymeren aus Acryl- und Methacrylsäure werden q und r so gewählt, daß aus der Summe $q + r$ ein mittleres Molekulargewicht dieser Copolymeren von etwa 800 resultiert, wobei 100 % der Molekulargewichte immer unter 1200 liegen und mindestens 90 % derselben zwischen 400 und 1000 liegen. Diese Verbindungen können im Handel leicht als wasserlösliche Natrium- oder andere Salze bezogen werden. Sie werden in der vorliegenden Anmeldung allgemein als "Polyacrylate P.M.M. 800" bezeichnet.

Die getesteten Terpolymeren aus Acryl-, Methacryl- und Itaconsäure gehören zu der in FR-PS-2 544 722 beschriebenen Art und entsprechen der folgenden allgemeinen Formel (IV)

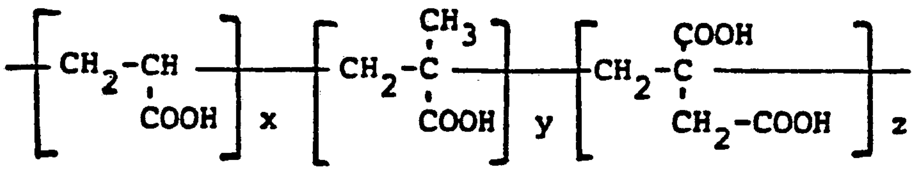

(IV)

in welcher die in Gew.-% ausgedrückten Indices x, y und z mindestens einen Wert von 10 für x und y und einen Wert von 5 für z haben und so gewählt sind, daß aus der Summe x + y + z ein zwischen 700 und 1500 liegendes Molekulargewicht der Terpolymeren resultiert, wobei das mittlere Molekulargewicht etwa 1000 beträgt. Sie werden in der vorliegenden Anmeldung in Form wasserlöslicher Natrium- oder anderer Salze verwendet und allgemein als "Polyacrylate P.M.M. 1000" bezeichnet.

Die zur Zeit in Betracht kommenden Polymeren in Salzform sind im allgemeinen in Wasser löslich. Man verwendet vorzugsweise die weniger kostspieligen Natriumsalze.

Die allgemeine Formel der Fettpolyamine und die obigen Formeln I bis IV zeigen deutlich die Verschiedenartigkeit der getesteten, kesselsteinverhindernden Polyamine und Polymeren. Aber aufgrund der Strenge der Tests, denen man diese Substanzen und ihre Kombinationen von Seiten des Anmelders unterworfen hat, und um die festgestellte Aktivierungswirkung klar herauszustellen und ihre unerwartete, systematische und progressive Natur zu zeigen, wurden in der folgenden Tabelle I absichtlich nur die Ergebnisse aufgeführt, die mit den handelsüblichsten Hilfsmitteln erzielt wurden, wobei die Hilfsmittel bezüglich der Polyacrylate unter den bei Versuchsbedingungen wirksamsten ausgewählt worden waren.

Aber diese starke Verschiedenartigkeit der getesteten Substanzen impliziert, daß die absichtlich vorgenommene Beschränkung in Tabelle I keinerlei Beschränkung des festgestellten, überraschenden Aktivierungseffektes, der das Ziel der vorliegenden Anmeldung ist, ausdrückt.

Um die unerwartete und systematische Natur der Eigenschaften der Zusammensetzungen aus den erfindungsgemäßen Substanzenkombination zu zeigen, wurde ein Arbeitsverfahren gewählt, das leicht, genau und möglichst schnell im Laboratorium die Phänomene der Kesselsteinbildung reproduzieren kann, die auch in Dampf- oder Heißwassergeneratoren und in Kühl- oder Luftbefeuchtungssystemen auftreten.

Der größte Teil dieser Kesselsteinbildung beruht auf dem fortschreitenden Unlöslichwerden der ausfällbaren Salze des Wassers unter der gemeinsamen oder isolierten Wirkung einer Temperaturerhöhung und/oder Konzentrationserhöhung durch Verdampfen des Wassers unter Krustenbildung.

Man weiß, daß die zum Studium und zur Reproduktion dieser Phänomene üblicherweise eingesetzten Tests bei niedrigen Temperaturen von relativ langer Dauer sind; außerdem sind sie nicht leicht durchführbar und bringen Gefahren für die Anlagen in den Dampf- oder Heißwassergeneratoren der Industrie mit sich. Zur Behebung dieser Nachteile ist das für die Versuche verwendete Arbeitsverfahren aus "VdTÜV Richtlinien für die Untersuchung von Kesselsteingegenmitteln", Ausgabe Sept. 1973, abgeleitet worden.

Die Vorrichtung für den Kesselsteinbildungstest durch Abdampfen und Konzentrieren eines kesselsteinbildenden Wassers bei atmosphärischem Druck besteht im wesentlichen aus

1) einer Wärmequelle aus Quarz mit einer nominellen Leistung von 0,5 KW, einer Mindestgesamtlänge von 350 mm und einem einheitlichen Durchmesser von 38 mm, der eine einheitliche Wärmebildungszone von etwa 40 mm aufweist, die höchstens 10 mm vom unteren Ende des Tauchteils beginnt;

2) einem hohen 2-l-Becher, der in einen zweiten, niedrigen 2-l-Becher gestellt und in diesem durch einen oder mehrere Ringe aus Kork oder einem Isoliermaterial, das die heiße Luft zwischen den beiden Bechern möglichst weitgehend zurückhält, festgehalten wird;

3) einem (durchsichtigen oder undurchsichtigen) Sammelbehälter einer Mindestnutzkapazität von 6 l, der mit einem fein einstellbaren Hahn versehen ist, welcher durch einen durchsichtigen, über dem hohen 2-l-Becher endenden Plastikschlauch verlängert ist.

Die Wärmequelle aus Quarz wird axial und vertikal in solcher Weise gehalten, daß sich ihr unteres Ende im Abstand von 15 mm vom Boden des hohen 2-l-Bechers befindet.

Das kesselsteinbildende Testwasser wird aus einem entmineralisierten Wasser von 0,1 Mikrosiemens/cm hergestellt, in welchem man Calciumcarbonat (für Analysezwecke reines $CaCO_3$) und Calciumsulfat (für Analysezwecke reines $CaSO_4$) in solcher Weise löst, daß nach Einführung von Kohlensäuregas bis zum vollständigen Lösen der Calciumsalze und Einleiten von filtrierter Luft zur möglichst gründlichen Mitführung der gelösten Kohlensäure das erhaltene Wasser eine Sulfathärte von 10° (französisch) und eine Carbonathärte von 54° (französisch) entsprechend 640 mg/kg Gesamtcalcium, ausgedrückt als $CaCO_3$ (oder 358,4 mg/kg CaO), enthält. Die Menge des so hergestellten Wassers, die einem Wärmeschock und einer fortschreitenden Verdampfung unterworfen wird, beträgt für jeden Versuch genau 6000 ml, so daß die in den unteren Becher eingeführte Gesamtmenge an $CaCO_3$ 6 x 640 = 3840 mg beträgt.

Der Kesselsteininhibitor oder die Inhibitorenmischungen werden vorher in Form von Vordispersionen oder Lösungen von 10 % in entmineralisiertem Wasser von 0,1 Mikrosiemens/cm zu 6 l Testwasser zugefügt, und zwar in solchen Mengen, daß man in 6 l Testwasser die Dosierungen erhält, die in Tabelle I in Teilen pro Mill. Gewichtsteile der aktiven, trockenen Materialien angegeben sind.

Das Testverfahren besteht in der schnellen Einführung von 1200 ml behandeltem Wasser in den hohen 2-l-Becher, worauf der Quarztauchsieder angestellt wird. Wenn das Sieden anfängt, wird der Wasserspiegel im

Becher durch das Regelventil konstant gehalten, um ein Verdampfen zu kompensieren; dies geschieht bis zur beendeten Einführung von 6000 ml Testwasser.

Dann wird das Sieden aufrechterhalten, bis das Wasservolumen im Becher auf 600 ml ± 50 ml verringert ist, was einer etwa 10-fachen Konzentration entspricht. Die Verdampfungsrate liegt im allgemeinen zwischen 0,630 und 0,670 l/h. Dann wird der Tauchsieder abgestellt, und man läßt die gesamte Vorrichtung sich allmählich bis auf Umgebungstemperatur abkühlen.

Das gesamte, für die folgenden Messungen verwendete, entmineralisierte Wasser besitzt eine Leitfähigkeit von 0,1 Mikrosiemens/cm.

Das Wasser des Bechers, dessen filtriertes Volumen genau gemessen wird, wird durch ein Sieb mit 0,5 mm Maschenöffnung und dann durch ein gefaltetes Papierfilter filtriert. Der $CaCO_3$-Gehalt dieses Wassers wird durch Titrimetrie mittels der Ausrüstung CALCIUM der Firma Merck, Bezeichnung Aquamerck Nr. 11.110, sorgfältig gemessen. Dieser mit dem Volumen multiplizierte Gehalt ergibt die nicht ausgefallene Calciummenge, die im konzentrierten Wasser löslich bleibt.

Dann wäscht man ohne irgendwelche mechanische Einwirkung den Becher mit etwa 100 ml entmineralisiertem Wasser, das ebenfalls durch das Sieb und das Papierfilter filtriert wird. Der an den Becherinnenseiten haftende Rückstand sowie der auf dem Filter zurückgehaltene Rückstand werden in verdünnter Salzsäure gelöst; die erhaltene Lösung wird nach sorgfältigem und wiederholtem Spülen von Becher und Filter mit entmineralisiertem Wasser zu den bereits abfiltrierten 100 ml zugefügt. Das Ganze wird in einen Meßbehälter eingeführt und mit entmineralisiertem Wasser auf 1000 ml gebracht. Dann wird wie oben das Calcium (als Rückstand ausgedrückt in mg des ausgefallenen $CaCO_3$) titriert.

Mit verdünnter Salzsäure wird sorgfältig der gesamte, auf dem Tauchsieder fixierte Kesselstein und der auf dem Sieb zurückgehaltene Kesselstein gelöst, und die Lösung wird in einen Meßbehälter eingeführt. Tauchsieder und Sieb werden gründlich mit entmineralisiertem Wasser gespült, bis der Meßbehälter auf 1000 ml gefüllt ist. Dann titriert man wie oben in der Chlorionen enthaltenden Lösung das Calcium (ausgedrückt in mg des in Form von Kesselstein ausgefallenen $CaCO_3$ ).

Die Summe aus dem im konzentrierten Wasser festgestellten $CaCO_3$ in mg, den Rückständen und dem Kesselstein sollte 3840 ± 2 % erreichen.

Die Ergebnisse der verschiedenen, nach diesem Verfahren durchgeführten Tests sind in Tabelle I aufgeführt; sie sind eine Veranschaulichung und keine Einschränkung.

**Tabelle 1**

vergleichende Ergebnisse von Tests der Kesselsteinbildung nach ansteigender Wirksamkeit

| Inhibitorzusammensetzung (aktive Materialen) | | Dosis in ppm (trocken) | Calciummenge in mg $CaCO_3$ | | | | Fehler in % d.Th. | Niederschlag in %, ausgef. in Form von | | Kesselst.-vermind. in % |
|---|---|---|---|---|---|---|---|---|---|---|
| | | | Wasser | loser Rückstand | Kesselstein | insgesamt | | loser Rückstand | Kesselstein | |
| $C_{12}$-$C_{18}$ aliph. | A | 2 | 1067 | 199 | 2572 | 3838 | - 0,05 | 7,2 | 92,8 | |
| Polyamine | B | 20 | 602 | 1369 | 1884 | 3855 | + 0,4 | 42,1 | 57,9 | |
| POLYMALEAT | C | 20 | 614 | 1410 | 1805 | 3829 | - 0,3 | 43,9 | 56,1 | |
| P.M.M 800 | D | 18 + A | 587 | 1650 | 1580 | 3817 | - 0,6 | 51,1 | 48,9 | -12,8 % |
| POLYACRYLAT | E | 20 | 578 | 1700 | 1535 | 3813 | - 0,7 | 52,6 | 47,4 | |
| P.M.M. 1000 | F | 18 + A | 585 | 1905 | 1330 | 3820 | - 0,5 | 58,9 | 41,1 | - 13,3 % |
| POLYACRYLAT | G | 20 | 548 | 1970 | 1300 | 3818 | - 0,6 | 60,4 | 39,6 | |
| P.M.M. 800 | H | 18 + A | 565 | 2199 | 1065 | 3829 | - 0,3 | 67,4 | 32,6 | - 17,7 % |
| POLYACRYLAT | J | 20 | 526 | 2200 | 1106 | 3832 | - 0,2 | 66,5 | 33,5 | |
| P.M.M. 1500 | H | 18 + A | 576 | 2356 | 916 | 3848 | + 0,2 | 72,0 | 20,8 | - 16,4 % |
| Mischungen aus | L | 20 | 570 | 2130 | 1130 | 3830 | - 0,3 | 65,3 | 34,7 | |
| Polyacrylaten | M | 18 + A | 602 | 2460 | 760 | 3822 | - 0,5 | 76,4 | 23,6 | - 32,0 % |
| P.M.M. 1000 | N | 30 | 578 | 2275 | 975 | 3828 | - 0,3 | 70,0 | 30,0 | |
| 2 : 1 | P | 28 + A | 540 | 2647 | 657 | 3844 | + 0,1 | 80,1 | 19,9 | - 33,7 % |

ppm = Gew.-Teile pro Mill; P.M.M. = mittleres Molekulargewicht

Die Ergebnisse von Tabelle I zeigen deutlich, daß unter den Testbedingungen die Zugabe von nur 2 ppm aliphatischer $C_{12}$ - bis $C_{18}$-Polyamine zu 18 oder 28 ppm Kesselsteininhibitoren sehr unterschiedlicher Natur die jeweilige Aktivität der letzteren in einem wesentlich höheren Prozentsatz ansteigen läßt, als sie der isolierten Inhibitoraktivität der Polyamine in den schwachen Konzentrationen, in welchen sie zugegeben werden,

entsprechen.

In ganz überraschender Weise wird außerdem deutlich, daß sich die Verstärkeraktivität der betreffenden Polyamine in direktem Zusammenhang mit der Inhibitorwirksamkeit erhöht, die die einzelnen getesteten Polymeren oder ihre Mischungen besitzen.

Es genügt ein Vergleich der unter den Bedingungen von Test A & B, C & D, E & F, G & H, J & K, L & M und N & P gebildeten Kesselsteinmengen, um die bemerkenswerte und überraschende Natur dieser "Aktivierung" festzustellen.

In Test A & B wurden absichtlich die Ergebnisse der nur in Anwesenheit von 2 und 20 ppm Polyaminen durchgeführten Tests aufgeführt, um deutlich zu machen, daß sie - obwohl sie unter den Testbedingungen in einer Dosis von 20 ppm eine gewisse Inhibitorkapazität zeigen - eine derartige Wirkung dagegen nicht aufweisen können, wenn sie in Test D, F, H, K, H und P in einer Dosis von 2 ppm zu spezifischen Kesselsteininhibitoren zugefügt werden.

Wenn auch die in der oben genannten FR-PS 1 453 023 beschriebenen, aliphatischen $C_{12}$ - bis $C_{18}$ -Polyamine gewöhnlich in wäßriger Lösung nicht mit den in den Tests genannten Inhibitorpolymeren verträglich sind und mit diesen im allgemeinen schwer lösliche Zusammensetzung bilden, bleibt die getrennte Zugabe in kesselsteinbildende Industriewässer oder ihre entsprechende Vorbehandlung, um sie mit den kesselsteinbildenden Polymeren verträglich zu machen, damit letzteren eine erhöhte Antikesselsteinwirkung verliehen wird, im Rahmen der vorliegenden Erfindung.

In den in Tabelle I aufgeführten Versuchen wurden die gesamten Inhibitorkonzentrationen auf 2, 20 und 30 ppm aktiver Produkte begrenzt, um die Darlegung der Erfindung zu vereinfachen und die systematische Progression der erzielten Ergebnisse leichter vergleichbar zu machen. Selbstverständlich ist aber die Verwendung von anderen Mengen an Fettpolyaminen und polymeren Inhibitoren der Kesselsteinbildung zum Maskieren und/oder Dispergieren, als sie in den Beispielen genannt sind, im Rahmen der vorliegenden Erfindung.

Auch die Verwendung von Zusammensetzungen aus Fettpolyaminen und polymeren Kesselstein-Inhibitoren zum Maskieren und/oder Dispergieren, die andere Molekulargewichte als die in der Tabelle aufgeführten Materialien besitzen, wird von der vorliegenden Erfindung umfaßt.

Weiter fällt auch die Zugabe von Kombinationen aus $C_{12}$- bis $C_{18}$ - Fettpolyaminen und Kesselstein-Inhibitorpolymeren in Industriewässer, die einer Verdampfung oder Konzentrierung unterworfen werden und niedrigere oder höhere Gehalte an ausfällbaren Kationen besitzen, als dies in den Versuchen angegeben wurde, unter die vorliegende Erfindung. Ebenfalls erfindungsgemäß ist die Verwendung dieser Kombinationen aus Polyaminen und Kesselstein-Inhibitorpolymeren in Wässern, die andere ausfällbare Kationen enthalten, als sie in den Versuchen genannt wurden.

Auch die Zugabe von Polyaminen der in der oben genannten FR-PS 1 435 023 beschriebenen Art zu Antikesselstein-Polymeren und/oder Dispergiermitteln in einem kesselsteinbildenden Wasser zur Erzielung einer Antikorrosionswirkung fällt unter den Umfang der vorliegenden Erfindung. Tatsächlich sind die schwach kesselsteinbildenden Industriewässer im allgemeinen nicht korrodierend, wie in der Arbeit von F. Poirier und Legrand "Théorie des eaux naturelles" nachgewiesen wurde, wobei aber die stark chloridhaltigen Wässer ausgenommen sind, für deren Verwendung bestimmte spezifische Korrosionsinhibitoren erforderlich sein können.

**Patentansprüche**

1. Verfahren zur Verhinderung von Kesselstein, dadurch gekennzeichnet, daß man als Antikesselsteinmittel, das zu behandelndem Wasser zugegeben wird, eine synergistische Zusammensetzung (Kombination) aus mindestens 50 Gew.-% Polymeren als Salze ethylenisch ungesättigter Säuren, ausgewählt aus von Polymaleaten, Polyacrylaten, Polymethacrylaten, Maleat-Acrylat-Copolymeren, Acrylat-Methacrylat-Copolymeren, Acrylat-Methacrylat-Itaconat-Terpolymeren und Mischungen derselben, und höchstens 50 Gew.-% aliphatischer Polyamine der Formel

$$R \left[ NH-(CH_2)_3 \right]_n NH_2$$

in welcher

R einen aliphatischen Rest mit 12 bis 18 Kohlenstoffatomen bedeutet und

n eine gerade oder ungerade Zahl von 1 bis 6 ist,

wobei sich die Prozentsätze auf die Polymeren und Polyamine in trockenem Zustand beziehen, verwendet.

2. Verfahren nach Anspruch 1, dadurch gekennzeichnet, daß

a) die verwendeten Polymaleate und Maleat-Acrylat-Copolymeren erhalten worden sind durch Salzbildung von Säuren der allgemeinen Formel

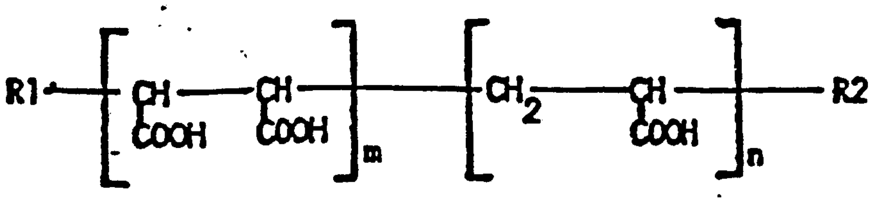

(I)

in welcher

$R_1$ und $R_2$, die gleich oder verschieden sind, Wasserstoff oder einen Rest bedeuten, der vom Lösungsmittel der Polymerisation oder dem verwendeten Katalysator stammt,

m eine andere Bedeutung als Null hat und

die Summe m + n mindestens = 2 und weniger als etwa 50 beträgt und so gewählt ist, daß das Polymer ein beabsichtigtes Molekulargewicht zwischen 300 und 5000, vorzugsweise ein mittleres Molekulargewicht um 800, hat,

b) die verwendeten Polyacrylate erhalten worden sind durch Salzbildung von Säuren der allgemeinen Formel

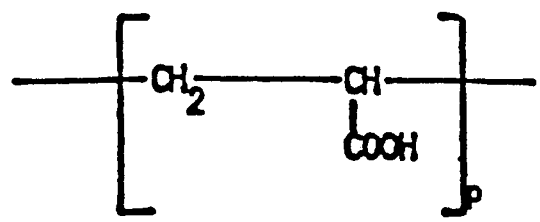

(II)

in welcher p einen solchen Wert hat, daß das mittlere Molekulargewicht dieser Polymeren um 1500 beträgt;

c) die verwendeten Polymethacrylate und Acrylat-Methacrylat-Copolymeren erhalten worden sind durch Salzbildung von Säuren der allgemeinen Formel

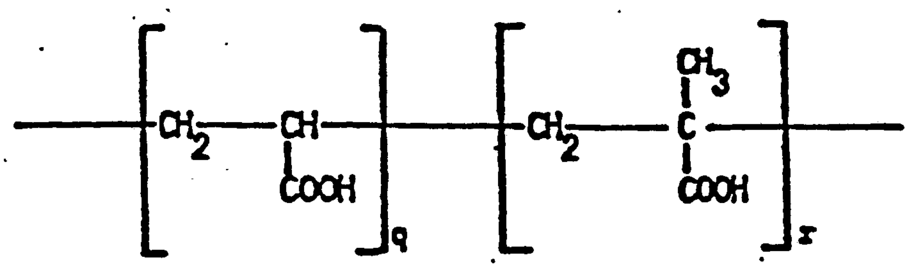

(III)

in welcher, im Fall der Methacrylsäurepolymeren,

q = 0 ist und

r einen solchen Wert hat, daß das mittlere Molekulargewicht dieser Polymeren etwa 800 beträgt,

und, im Fall der Copolymeren aus Acryl- und Methacrylsäure, q und r solche Werte haben, daß aus der Summe q + r ein mittleres Molekulargewicht des genannten Copolymeren um 800 resultiert, wobei 100 % der Molekulargewichte immer unter 1200 liegen und mindestens 90 % zwischen 400 und 1000 liegen; und

d) die verwendeten Acrylat-Methacrylat-Itaconat-Terpolymeren erhalten worden sind durch Salzbildung von Säuren der allgemeinen Formel

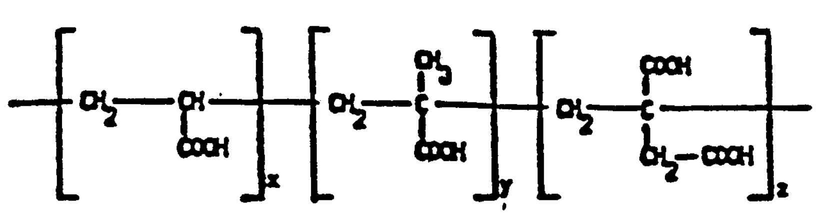

(IV)

hinsichtlich der Indices x, y und z, ausgedrückt in Gew.-%, haben x und y mindestens einen Wert von 10 und z einen Wert von 5, und sie sind derart gewählt, daß aus der Summe x + y + z ein zwischen 700 und 1500 verteiltes Molekulargewicht dieses Terpolymeren und ein mittleres Molekulargewicht von etwa 1000 resultiert.

3. Verfahren nach Anspruch 1 oder 2, dadurch gekennzeichnet, daß die Zusammensetzung 95 bis 85 Gew.-% der Polymere und 5 bis 15 Gew.-% der aliphatischen Polyamine enthält.

4. Verfahren nach einem der Ansprüche 1 bis 3, dadurch gekennzeichnet, daß man die Polyamine in Form von Dispersionen oder Lösungen in Wasser und die Polymeren in Salzform als Lösungen in Wasser in das zu behandelnde Wasser einführt.

5. Antikesselsteinmittel, gekennzeichnet durch eine synergistische Zusammensetzung (Kombination) aus mindestens 50 Gew.-% Polymeren als Salze ethylenisch ungesättigter Säuren, ausgewählt aus von

Polymaleaten, Polyacrylaten, Polymethacrylaten, Maleat-Acrylat-Copolymeren, Acrylat-Methacrylat-Copolymeren, Acrylat-Methacrylat-Itaconat-Terpolymeren und Mischungen derselben, und höchstens 50 Gew.-% aliphatischer Polyamine der Formel

$$R \left[ NH-(CH_2)_3 \right]_n NH_2$$

in welcher
R einen aliphatischen Rest mit 12 bis 18 Kohlenstoffatomen bedeutet und
n eine gerade oder ungerade Zahl von 1 bis 6 ist,
wobei sich die Prozentsätze auf die Polymeren und Polyamine in trockenem Zustand beziehen.

6. Antikesselsteinmittel nach Anspruch 5, dadurch gekennzeichnet, daß
a) die Polymaleate und Maleat-Acrylat-Copolymeren Salze von Säuren der allgemeinen Formel

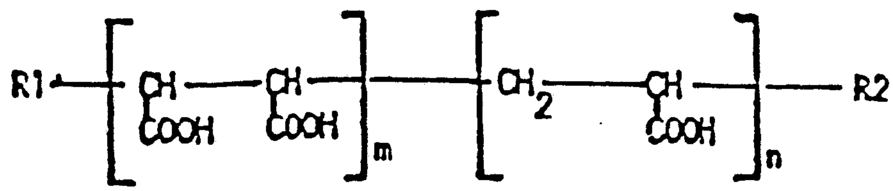

(I)

sind, in welcher $R_1$ und $R_2$, die gleich oder verschieden sind, Wasserstoff oder einen Rest bedeuten, der vom Lösungsmittel der Polymerisation oder dem verwendeten Katalysator stammt, m eine andere Bedeutung als Null hat und die Summe m + n mindestens = 2 und weniger als etwa 50 beträgt und so gewählt ist, daß das Polymer ein beabsichtigtes Molekulargewicht zwischen 300 und 5000, vorzugsweise ein mittleres Molekulargewicht um 800, hat,
b) die Polyacrylate Salze von Säuren der allgemeinen Formel

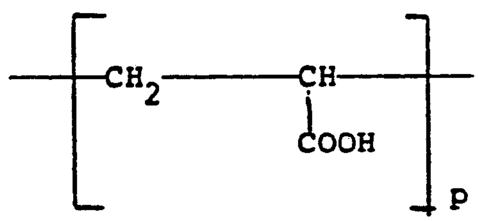

(II)

sind, in welcher p einen solchen Wert hat, daß das mittlere Molekulargewicht dieser Polymeren um 1500 beträgt;
c) die Polymethacrylat- und Acrylat-Methacrylat-Copolymerisat-Salze von Säuren der allgemeinen Formel

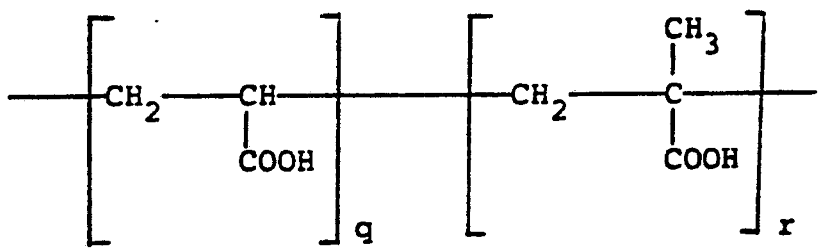

(III)

sind, in welcher, im Fall der Methacrylsäurepolymeren,
q = 0 ist und
r einen solchen Wert hat, daß das mittlere Molekulargewicht dieser Polymeren etwa 800 beträgt,
und, im Fall der Copolymeren aus Acryl- und Methacrylsäure, q und r solche Werte haben, daß aus der Summe q + r ein mittleres Molekulargewicht des genannten Copolymeren um 800 resultiert, wobei 100 % der Molekulargewichte immer unter 1200 liegen und mindestens 90 % zwischen 400 und 1000 liegen; und

d) die Acrylat-Methacrylat-Itaconat-Terpolymerisat-Saltze von Säuren der allgemeinen Formel

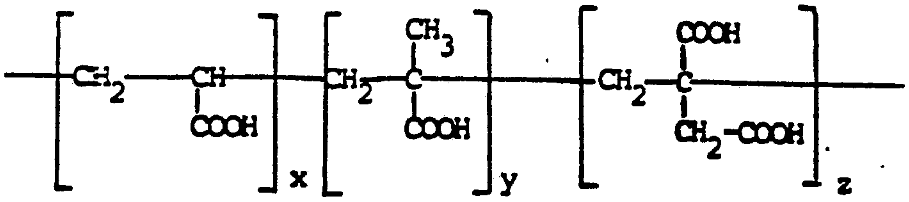

(IV)

sind,

in welcher von den Indices x, y und z, in Gew.-% ausgedrückt, x und y mindestens einen Wert von 10 haben, z einen Wert von 5 hat und die Indices derart gewählt sind, daß aus der Summe x + y + z ein zwischen 700 und 1500 verteiltes Molekulargewicht dieses Terpolymeren und ein mittleres Molekulargewicht von etwa 1000 resultiert.

7. Antikesselsteinmittel nach Anspruch 5 oder 6, dadurch gekennzeichnet, daß die Zusammensetzung 95 bis 85 Gew.-% der Polymere und 5 bis 15 Gew.-% der aliphatischen Polyamine enthält.

**Claims**

1. A process for preventing scale, characterised in that as anti-scale agent which is added to water to be treated there is used a synergistic composition (combination) of at least 50 % by weight of polymers salts of ethylenically unsaturated acids selected from polymaleates, polyacrylates, polymethacrylates, maleate/acrylate copolymers, acrylate/methacrylate copolymers, acrylate/methacrylate/itaconate terpolymers and mixtures thereof and at most 50 % by weight of aliphatic polyamines corresponding to the formula

$$R \left[ NH-(CH_2)_3 \right]_n NH_2$$

in which

R represents an aliphatic radical containing from 12 to 18 carbon atoms and

n is an even or odd number from 1 to 6,

the percentages relating to the polymers and polyamines in the dry state.

2. A process according to Claim 1, characterised in that

a) the polymaleates and maleate/acrylate copolymers used have been obtained by salt formation from acids corresponding to general formula

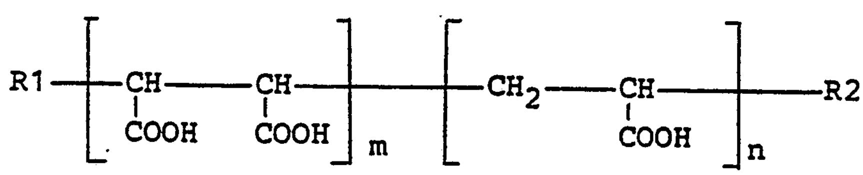

(I)

in which

$R_1$ and $R_2$, which are the same or different, represent hydrogen or a radical originating from the solvent of polymerisation or the catalyst used,

m has a meaning other than zero

and the sum m + n is at least 2 and less than about 50 and is selected such that the polymer has an intended molecular weight of between 300 and 5000, preferably an average molecular weight of about 800,

b) the polyacrylates used have been obtained by salt formation from acids corresponding to the general formula

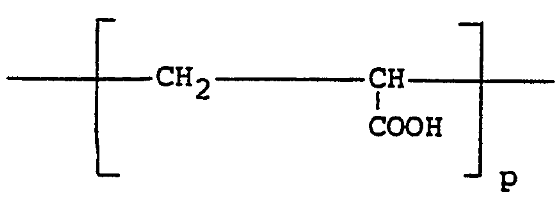

(II)

in which p has such a value that the average molecular weight of these polymers is about 1500;

c) the polymethacrylates and acrylate/methacrylate copolymers used have been obtained by salt formation from acids corresponding to the general formula

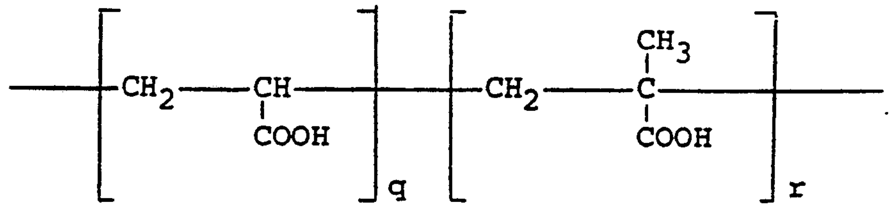

(III)

in which, in the case of methacrylic acid polymers,

q = 0 and r has such a value that the average molecular weight of these polymers is about 800 and,

in the case of the copolymers of acrylic and methacrylic acid, q and r have such values that an average molecular weight of the above-mentioned copolymer of about 800 results from the sum q + r, 100 % of the molecular weights invariably lying below 1200 and at least 90 % lying between 400 and 1000; and

d) the acrylate/methacrylate/itaconate terpolymers used have been obtained by salt formation from acids corresponding to the general formula

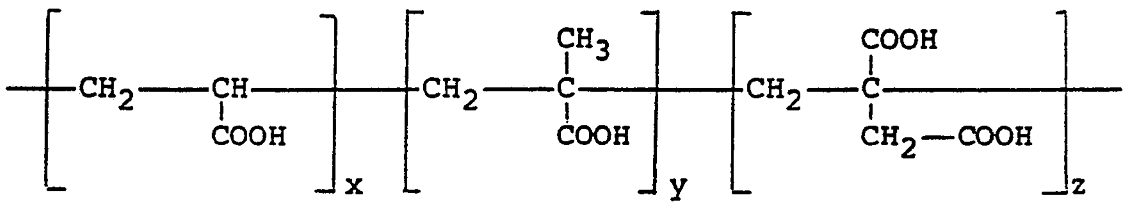

(IV)

with regard to the indices x, y and z, expressed in % by weight, x and y have a value of at least 10 and z has a value of 5 and they are selected such that a molecular weight of this terpolymer distributed between 700 and 1500 and an average molecular weight of about 1000 results from the sum x + y + z.

3. A process according to Claim 1 or 2, characterised in that the composition contains from 95 to 85 % by weight of the polymers and from 5 to 15 % by weight of the aliphatic polyamines.

4. A process according to one of Claims 1 to 3, characterised in that the polyamines are introduced in the form of dispersions or solutions in water and the polymers are introduced in salt form as solutions in water into the water to be treated.

5. An anti-scale agent, characterised by a synergistic composition (combination) of at least 50 % by weight of polymers as salts of ethylenically unsaturated acids selected from polymaleates, polyacrylates, polymethacrylates, maleate/acrylate copolymers, acrylate/methacrylate copolymers, acrylate/methacrylate/itaconate terpolymers and mixtures thereof and at most 50 % by weight of aliphatic polyamines corresponding to the formula

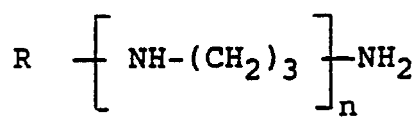

in which

R represents an aliphatic radical containing from 12 to 18 carbon atoms and

n is an even or uneven number from 1 to 6,

the percentages relating to the polymers and polyamines in the dry state.

6. An anti-scale agent according to Claim 5, characterised in that

a) the polymaleates and maleate/acrylate copolymers are salts of acids corresponding to the general formula

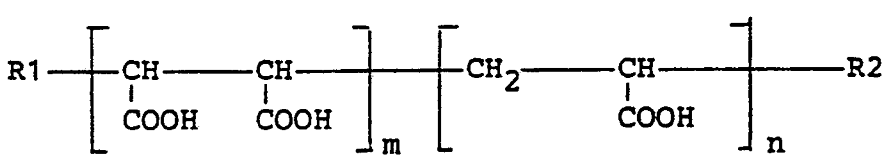

(I)

in which

$R_1$ and $R_2$, which are the same or different, represent hydrogen or a radical which originates from the solvent of polymerisation or the catalyst used,

m has a meaning other than zero and

the sum m + n at least 2 and less than about 50 and is selected such that the polymer has an intended molecular weight of between 300 and 5000, preferably an average molecular weight of about 800,

b) the polyacrylates are salts of acids corresponding to the general formula

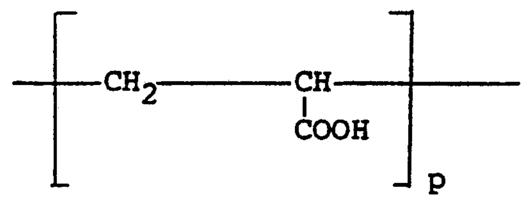

(II)

in which p has such a value that the average molecular weight of the polymers is about 1500;

c) the polymethacrylate and acrylate/methacrylate copolymer salts are from acids corresponding to the general formula

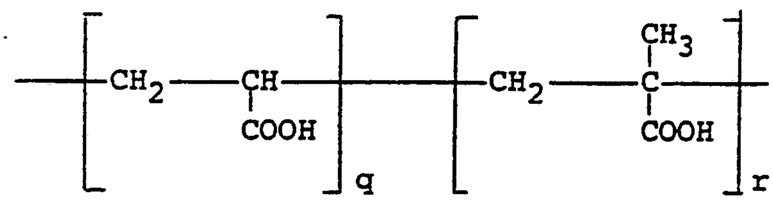

(III)

in which, in the case of methacrylic acid polymers, q = 0 and r has such a value that the average molecular weight of these polymers is about 800 and, in the case of copolymers of acrylic and methacrylic acid, q and r have such values that an average molecular weight of the abovementioned copolymer of about 800 results from the sum q + r, 100 % of the molecular weights invariably lying below 1200 and at least 90 % lying between 400 and 1000; and

d) the acrylate/methacrylate/itaconate terpolymer salts are from acids corresponding to the general formula

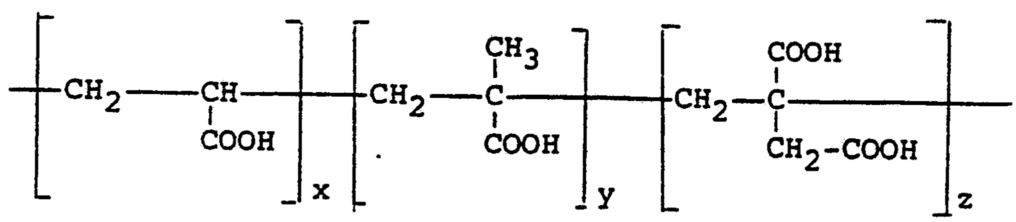

(IV)

in which, of the indices x, y and z, expressed in % by weight, x and y have a value of at least 10, z has a value of 5 and the indices are selected such that a molecular weight of this terpolymer distributed between 700 and 1500 and an average molecular weight of about 1000 results from the sum x + y + z.

7. An anti-scale agent according to Claim 5 or 6, characterised in that the composition contains from 95 to 85 % by weight of the polymers and from 5 to 15 % by weight of the aliphatic polyamines.

**Revendications**

1. Procédé antitartre caractérisé en ce que l'on utilise, comme agent antitertre à ajouter à l'eau à traiter, une association à effet synergique d'au moins 50 % en poids de polymères salifiés d'acides éthyléniques, choisis parmi les polymaléates, les polyacrylates, les polyméthacrylates, les copolymères maléates-acrylates, les copolymères acrylates-méthacrylates, les terpolymères acrylates-méthacrylates-itaconates et les mélanges de ces substances, et d'au plus 50 % en poids de polyamines aliphatiques de formule

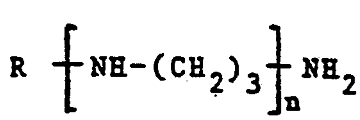

dans laquelle

R représente un radical aliphatique comportant 12 à 18 atomes de carbone et

n peut être un nombre entier, pair ou impair, compris entre 1 et 6,

les pourcentages se rapportant à des polymères et des polyamines à l'état sec.

2. Procédé suivant la revendication 1, caractérisé

a) en ce que les polymaléates et les copolymères maléates-acrylates utilisés sont obtenus par salification d'acides de formule générale

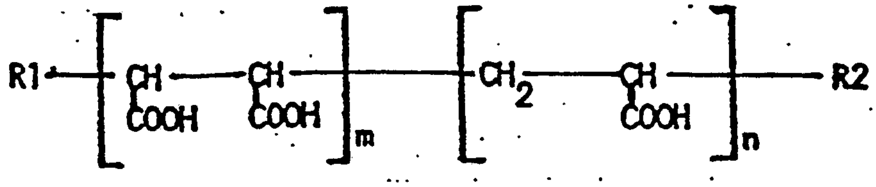

(I)

dans laquelle

$R_1$ et $R_2$, différents ou identiques, sont l'hydrogène ou des radicaux provenant du solvant de polymérisation ou du catalyseur utilisé,

m est différent de zéro, et

la somme m + n doit être au moins égale à 2 et inférieure à 50 environ et telle que le polymère ait le poids moléculaire voulu, compris entre 300 et 5000, et de préférence un poids moléculaire moyen voisin de 800,

b) en ce que les polyacrylates utilisés sont obtenus par salification d acides de formule générale

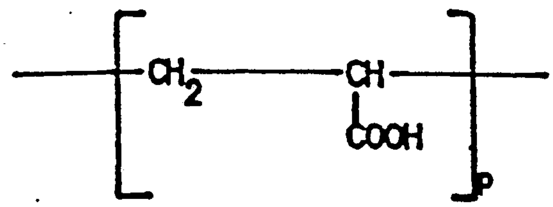

(II)

dans laquelle l'indice p a une valeur tel le que le poids moléculaire moyen desdits polymères soit voisin de 1500,

c) en ce que les polyméthacrylates et les copolymères acrylates-méthacrylates utilisés sont obtenus par salification d'acides de formule générale

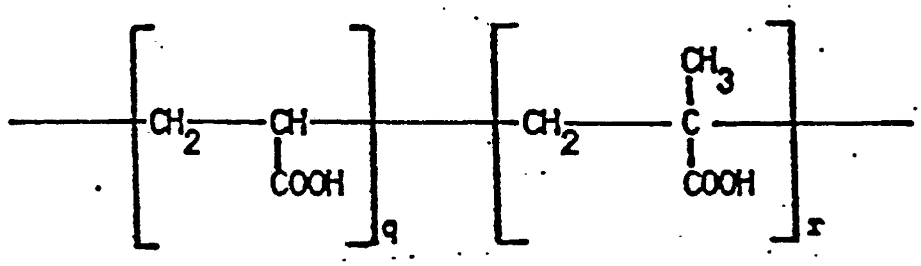

(III)

dans laquelle, dans le cas des polymères d'acide méthacrylique,

q est égal à zéro et

r a une valeur telle que le poids moléculaire moyen desdits polymères soit d'environ 800

et, dans le cas des copolymères d'acides acrylique et méthacrylique, q et r prennent des valeurs telles que la somme q + r confère auxdits copolymères un poids moléculaire moyen d'environ 800, 100 % des poids moléculaires étant toujours inférieurs à 1200 et 90 % au moins d'entre eux étant compris entre 400 et 1000, et

d) en ce que les terpolymères acrylates-méthacrylates-itaconates utilisés sont obtenus par salification d'acides de formule générale

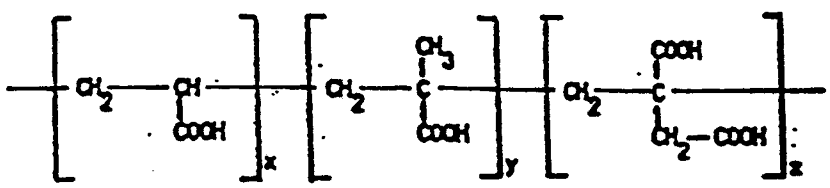

(IV)

dans laquelle les indices x, y et z, exprimés en % en poids, ont au moins une valeur de 10 pour x et y et une valeur de 5 pour z et sont tels que les sommes x + y + z confèrent auxdits terpolymères des poids moléculaires distribués entre 700 et 1500 et un poids moléculaire moyen voisin de 1000.

3. Procédé suivant la revendication 1 ou 2, caractérisé en ce que ladite association contient 95 à 85 % en poids desdits polymères et 5 à 15 % en poids desdites polyamines aliphatiques.

4. Procédé suivant l'une quelconque des revendications 1 à 3, caractérisé en ce que l'on introduit, dans l'eau à traiter, lesdites polyamines sous forme de dispersions ou de solutions dans l'eau et lesdits polymères salifiés sous forme de solutions dans l'eau.

5. A titre d'agent antitartre pour la mise en oeuvre du procédé suivant la revendication 1, une association à effet synergique d'au moins 50 % en poids de polymères salifiés d'acides éthyléniques, choisis parmi les polymaléates, les polyacrylates, les polyméthacrylates, les copolymères maléates-acrylates, les copolymères acrylates-méthacrylates, les terpolymères acrylates-méthacrylates-itaconates et les mélanges de ces substances, et d'au plus 50 % en poids de polyamines aliphatiques de formule

$$R\left[NH-(CH_2)_3\right]_n NH_2$$

dans laquelle
R représente un radical aliphatique comportant 12 à 18 atomes de carbone et
n peut être un nombre entier, pair ou impair, compris entre 1 et 6,
les pourcentages se rapportant à des polymères et des polyamines à l'état sec.

6. Agent antitartre suivant la revendication 5, caractérisé
a) en ce que les polymaléates et les copolymères maléates-acrylates sont des sels d'acides de formule générale

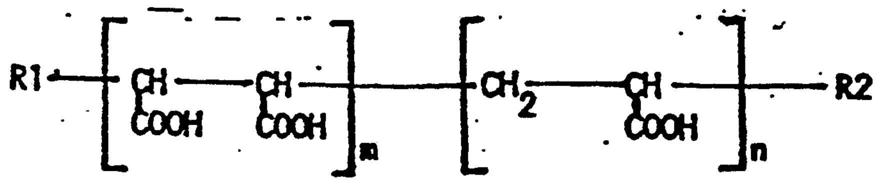
(I)

dans laquelle $R_1$ et $R_2$, différents ou identiques, sont l'hydrogène ou des radicaux provenant du solvant de polymérisation ou du catalyseur utilisé, m est différent de zéro, et la somme m + n doit être au moins égale à 2 et inférieure à 50 environ et telle que le polymère ait le poids moléculaire voulu, compris entre 300 et 5000, et de préférence un poids moléculaire moyen voisin de 800,
b) en ce que les polyacrylates sont des sels d'acides de formule générale

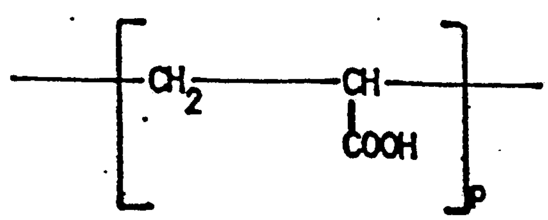
(II)

dans laquelle l'indice p a une valeur telle que le poids moléculaire moyen desdits polymères soit voisin de 1500,
c) en ce que les polyméthacrylates et les copolymères acrylates-méthacrylates sont des sels d'acides de formule générale

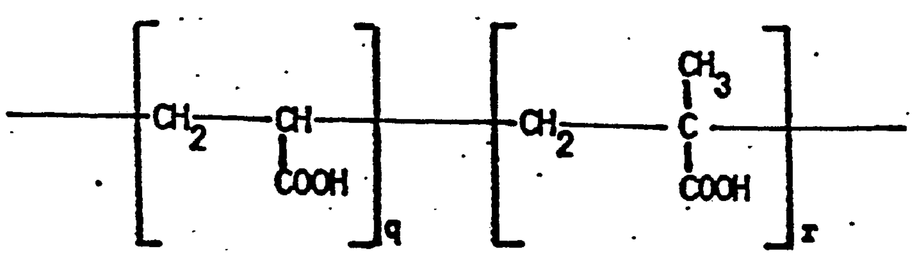
(III)

dans laquelle,dans le cas des polymères d'acide méthacrylique,
q est égal à zéro, et
r à une valeur telle que le poids moléculaire moyen desdits polymères soit d'environ 800
et, dans le cas des copolymères d'acides acrylique et méthacrylique, q et r prennent des valeurs telles que la somme q + r confère auxdits copolymères un poids moléculaire moyen d'environ 800, 100 % des poids moléculaires étant toujours inférieurs à 1200 et 90 % au moins d'entre eux étant compris entre 400 et 1000, et

d) en ce que les terpolymères acrylates-méthacrylates-itaconates sont des sels d'acides de formule générale

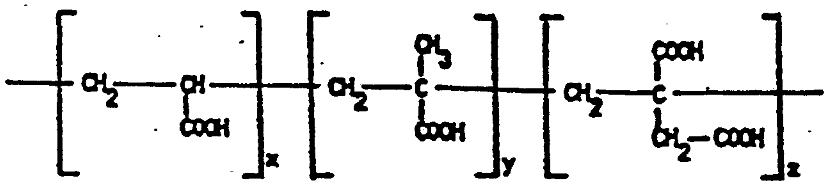

(IV)

dans laquelle les indices x, y et z, exprimés en % en poids, ont au moins une valeur de 10 pour x et y et une valeur de 5 pour z et sont tels que les sommes x + y + z confèrent auxdits terpolymères des poids moléculaires distribués entre 100 et 1500 et un poids moléculaire moyen voisin de 1000.

7. Agent antitartre suivant la revendication 5 ou 6, caractérisé en ce que ladite association contient 95 à 85 % en poids desdits polymères et 5 à 15 % en poids desdites polyamines aliphatiques.